(19) Europäisches Patentamt
European Patent Office
Office européen des brevets

(11) Publication number: **0 654 796 A1**

(12) # EUROPEAN PATENT APPLICATION

(21) Application number: **94118495.4**

(22) Date of filing: **24.11.94**

(51) Int. Cl.$^{6}$: **G21K 4/00**, C09K 11/02, C09K 11/85, C09K 11/86

(30) Priority: **24.11.93 US 157797**

(43) Date of publication of application: **24.05.95 Bulletin 95/21**

(84) Designated Contracting States: **DE FR GB**

(71) Applicant: **EASTMAN KODAK COMPANY**
**343 State Street**
**Rochester,**
**New York 14650 (US)**

(72) Inventor: **Bringley, Joseph F., Eastman Kodak Company**
**Patent Legal Staff,**
**343 State Street**
**Rochester,**
**New York 14650-2201 (US)**
Inventor: **Bryan, Philip Steven, Eastman Kodak Company**
**Patent Legal Staff,**
**343 State Street**
**Rochester,**
**New York 14650-2201 (US)**
Inventor: **Hyde, Andrea Marie, Eastman Kodak Company**
**Patent Legal Staff,**
**343 State Street**
**Rochester,**
**New York 14650-2201 (US)**

(74) Representative: **Brandes, Jürgen, Dr. rer. nat. et al**
**Wuesthoff & Wuesthoff**
**Patent- und Rechtsanwälte**
**Schweigerstrasse 2**
**D-81541 München (DE)**

(54) **Pigment stabilized radiation image storage panel.**

(57) A pigment stabilized radiation image storage panel. The panel has a support and a luminescent layer overlaying the support. The luminescent layer includes phosphor crystals capable of absorbing X-radiation and emitting electromagnetic radiation of a second longer wavelength upon exposure to electromagnetic radiation of a third wavelength. The luminescent layer includes a dispersed oxosulfur reducing pigment. The oxosulfur reducing pigment is a reducing agent for iodine. The oxosulfur reducing pigment exhibits light scattering. The oxosulfur reducing pigment has a concentration sufficient to substantially increase the photostimulated luminescence of the panel. The luminescent layer has a total concentration of light scattering pigment insufficient to substantially increase the resolution of the panel.

EP 0 654 796 A1

The invention relates to radiation image storage panels and more particularly relates to a pigment stabilized radiation image storage panel.

Storage or stimulable phosphors are crystalline materials which have the capability of storing latent X-ray images for later release, apparently by locally trapping electron-hole pairs created by incident X-rays. Like many other crystalline materials, storage phosphors have a crystal matrix which allows for the replacement of some atoms by other similar atoms, but does not readily accept other atoms or moieties. Storage phosphors are distinguishable from the phosphors used in X-ray intensifying or conversion screens. In the latter, a latent image is not stored and X-radiation causes the immediate release of visible light from irradiated phosphor crystals.

Radiation image storage panels are used in computed radiography. The panel is first exposed to X-radiation to create a latent image. The panel is then stimulated with longer wavelength radiation, resulting in the emission of radiation at a third wavelength. Typically a laser having a red or infrared beam is scanned over the panel, resulting in the emission of green or blue radiation. The emitted light is collected and the resulting signal is processed electronically to produce a final image.

Degradation of image panel performance due to phosphor panel discoloration has long been recognized. Discoloration is a particularly serious concern for radiation image storage panels, since unlike intensifying screens, storage panels are subject to cumulative degradative losses of both emitted light and stimulating radiation.

There has not been agreement as to the source of phosphor panel discoloration. What was noticed early was that intensifying panels subject to prolonged exposure to photographic film have tended to become discolored. US-A-4,374,905 and US-A-4,360,571 state that the discoloration is due to "volatile organic constituents escaping from the associated photographic film" (US-A- 4,374,905, column 1, lines 40-59 and US-A-4,360,571, column 1, lines 46-64). Great Britain Patent Application No. GB 2 017 140 A states:

"[I]t has been discovered that screens containing lanthanum[or gadolinium]-oxy-halide phosphors tend to discolor rapidly when in use and in particular when held in contact with an X-ray film, ...

"In spite of intensive research into this discolouration defect the cause of it is not yet clearly known but it appears to be a complex reaction caused, in part at least, by the hydroscopic nature of the lanthanum-oxy-halide phosphors or gadolinium-oxy-halide phosphors, the nature of the binder and the presence of the X-ray film held in contact with the screen for a period of time.

"Furthermore, under somewhat different conditions of use X-ray screens and in particular X-ray screens which contain lanthanum-oxyhalide or gadolinium-oxyhalide phosphors can lose speed due to a different defect which appears to involve only the phosphor. This is hydrolysis of the phosphor which is caused by water present in the phosphor layer due either to atmospheric moisture or aqueous cleaning fluid penetrating the protective layer of the screen. It is thought that quantities of halide or more surprisingly, the free halogen, released by hydrolysis may actually catalyse the discolouration of the binder or of compounds having migrated from the film." (page 1, lines 14-33)

In US-A-4,360,571, phosphors were treated with fatty acids or metal salts of fatty acids to prevent discoloration by "volatile organic constituents" and attack by water. In GB 2 017 140 A, intensifying screens were stabilized against discolouration and hydrolysis by incorporation of a compound containing a free epoxy group and, optionally, a dialkyl tin compound such as dibutyl tin diocytl as an additional stabilizer.

Yellowing of a phosphor layer of a radiation image storage phosphor panel, in which the phosphor contains iodine, is described in European Patent Specification No. EP 0 234 385 B1. The yellowing is ascribed to liberation of free iodine. The solution described for the yellowing problem, is incorporating in one of the layers of the panel a compound containing a, free epoxy group and/or a compound selected from: phosphites, organotin compounds, and metal salts of particular organic acids.

Pigments have been added to phosphor panels to absorb light of a particular wavelength (colored pigments), to scatter light (non-absorbing or white pigments) to increase resolution, or to act as stabilizers.

US-A-3,023,313 teaches an intensifying screen in which a first white pigment is added in a preferred concentration of 5-10 percent based upon the weight of the phosphor and an additional second pigment, sodium or potassium thiosulfate, is added as a "stabilizer". In the examples in US-A-3,023,313, sodium thiosulfate has a concentration of 1 or 3 or 7.5 percent based upon weight of the phosphor. It teaches that the resolution of the screen is increased without a substantial loss of speed in the preferred pigment concentration range.

US-A-3,836,784 similarly indicates that:

"In addition to the sodium activated cesium iodide, other materials may be included in the fluorocarbon binder. Pigments may be added to enhance resolution, for example, titanium dioxide and zirconium dioxide. The amount of pigment will generally be in the range of 0 to 10 weight percent based on the phosphor. Small amounts of stabilizers may be included, such as sodium or potassium thiosulfate."

US-A-4,374,905, teaches a solution to both: discoloration by "volatile organic constituents" and attack by water, which utilizes a white pigment. The phosphor for an intensifying screen was milled with anhydrous $MgSO_4$ or $ZnSO_4$ (0.5 to 4 weight percent based on phosphor weight) during preparation of the screen. It was proposed that the protective action was based upon the reaction:

$$MgSO_4 + 2\ HOH \rightarrow Mg(OH)_2 + 2\ H^+ + SO_4^{2-}$$

US-A-5,145,743 teaches the addition of $BaSO_4$ or other white pigment particles to the surface of phosphor crystals (by milling or the like) to increase resolution, but somewhat lower speed. The pigment particles are in a concentration of 0.05 to 0.45 weight percent based on the weight of the phosphor. At a concentration of 0.5 weight percent based on the weight of the phosphor, the speed decrease was undesirably large.

US-A-4,350,893 teaches the addition of white pigment to a storage panel to enhance resolution. The white pigment is added in a range of 0.01 to 1 part by weight per one part by weight of the stimulable phosphor (1 to 100 weight percent based upon the weight of the phosphor). US-A-4,350,893, contrary to the above-cited patents, characterizes the intensifying screen art as teaching that added pigment increases speed rather than resolution:

"In the conventional radiography, it is well known to disperse a white powder in the fluorescent layer of an intensifying screen. However, quite unlike the present invention, a white powder is dispersed in the fluorescent layer of an intensifying screen to efficiently utilize the light (instantaneous light) emitted by a phosphor, thereby improving the speed of the intensifying screen. In contrast to this, in the present invention, a white powder is dispersed in the fluorescent layer of a radiation image storage panel to control the spread of stimulating rays in the fluorescent layer, thereby improving the sharpness of the image obtained."

Storage panels have more recently become available in which good resolution is provided without the use of white pigments.

It would be desirable to provide an improved pigment stabilized radiation image storage panel having increased stability against yellowing and increased speed and improved methods for stabilizing radiation image storage panels against yellowing.

The invention, in its broader aspects, provides a pigment stabilized radiation image storage panel. The panel has a support and a luminescent layer overlaying the support. The luminescent layer includes phosphor crystals capable of absorbing X-radiation and emitting electromagnetic radiation of a second longer wavelength upon exposure to electromagnetic radiation of a third wavelength. The luminescent layer includes a dispersed oxosulfur reducing pigment. The oxosulfur reducing pigment is a reducing agent for iodine. The oxosulfur reducing pigment exhibits light scattering. The oxosulfur reducing pigment has a concentration sufficient to substantially increase the photostimulated luminescence of the panel. The luminescent layer has a total concentration of light scattering pigment insufficient to substantially increase the resolution of the panel.

It is an advantageous effect of at least some of the embodiments of the invention that pigment stabilized radiation image storage panels are provided which exhibit increased stabilization against yellowing and increased speed.

The pigment stabilized radiation image storage panel of the invention comprises a support and a luminescent layer which includes phosphor crystals. The luminescent layer or a layer adjoining the luminescent layer includes an oxosulfur reducing pigment.

The terms "oxosulfur reducing pigment" and "oxosulfur reducing pigment for molecular iodine" are used to designate particlulate oxygen-and-sulfur-containing species capable of reducing free (molecular) iodine according to the half-reaction:

$$I_2 + 2e^- \rightarrow 2I^-$$

Oxosulfur reducing pigments include a moiety or ion of the general formula

$$S_jO_k,$$

where j and k are positive integers such that the ratio, j/k is defined by

$$0.25 < j/k < 1.0.$$

This formula is inclusive of species in which $S_jO_k$ is a free ion and species in which $S_jO_k$ is a charge bearing moiety covalently linked to another group. The terms "oxosulfur reducing pigment" and the like are similarly inclusive of both uncharged species and charged anions. Where a distinction is necessary, for example, between a salt and its disassociated ion, it will be understood from context.

$S_jO_k$ Ions of oxosulfur reducing pigments include: $SO_3^{2-}$, $S_2O_4^{2-}$, $S_2O_3^{2-}$, $S_2O_5^{2-}$, and $S_4O_6^{2-}$. Salts of $SO_4^{2-}$, $SO_5^{2-}$, and $S_2O_8^{2-}$ do not meet the above-indicated j/k ratio and are not oxosulfur reducing pigments for molecular iodine. In a particular embodiment of the invention, the oxosulfur reducing pigment for iodine includes the thiosulfate moiety $S_2O_3^{2-}$, which can be represented by the formula:

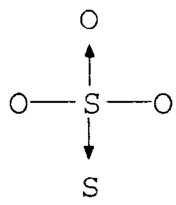
.

The central atom of sulfur has an oxidation number of 6+ and the outer sulfur atom has an oxidation number of 2-. Thiosulfate reacts with free (molecular) iodine in accordance with the following equation:

$$2S_2O_3^{2-} + I_2 \rightarrow S_4O_6^{2-} + 2I^-$$

In another particular embodiment of the invention, the oxosulfur reducing pigment is a polythionate. Polythionate ions are often represented by the general formula:

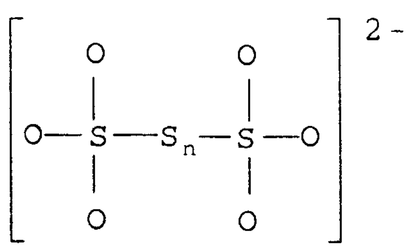
,

where n is from 1 to 22 or higher. The polythionate: $S_4O_6^{2-}$, which is commonly known as tetrathionate, is a product of the reaction of thiosulfate and free iodine.

Preferred oxosulfur reducing pigments have the general formula

$D_nS_jO_k$,

where j and k are defined as above and $D_n$ represents n cations chosen such that charge neutrality is obeyed. Cations in the oxosulfur reducing pigments, can be selected on the basis of light-scattering capability (whiteness) of the pigment, convenience, and non-interference with the desired characteristics of the storage panel produced. The determination of suitable whiteness for a pigment, or particular grade of pigment, is a matter of simple experimentation and is well known to those skilled in the art. For example, US-A-4,350,893 at column 4, lines 30-54 teaches a whiteness evaluation test which could be utilized. Suitable counterions include: $Ba^{2+}$, $Mg^{2+}$, $Na^+$, $K^+$, and $NH_4^+$. A great variety of other cations could be used. One skilled in the art, by use of references; such as Treatise on Inorganic and Theoretical Chemistry, J.W. Mellor, ed., Longmar, Green, & Co., New York, (1930), Vol. 10, p.514; and/or simple experimentation could readily ascertain great numbers of oxosulfur reducing pigments.

The oxosulfur reducing pigment is dispersed in particulate form in the luminescent layer of the storage panel of the invention or in an overcoat layer adjoining the luminescent layer. A preferred median particle size is from 0.01 to 4 micrometers. It is more preferred that the median particle size be from 0.1 to 1 micrometer and that the range of particle sizes be substantially from 0.01 to 4 micrometers, that is, that particles outside the indicated range be limited to trace amounts.

Oxosulfur reducing pigments are comparable in reflectance and light scattering to other white pigments such as barium sulfate. Reflection coefficients can, of course, vary slightly depending upon particle shape, particle size, purity and the like; however, even with such variation, in the absence of high impurity levels, the oxosulfur reducing pigments of the invention are highly reflective.

The amount of oxosulfur reducing pigment in the storage panel of the invention is, surprisingly, based upon the amount of phosphor in the panel, not the amount of iodine. This is surprising, since a stoichiometric relationship between iodine in the phosphor, free iodine, and stabilizer for the free iodine would have seemed more likely.

Referring now to Table 1 and the Examples and Comparative Example presented therein, in a particular embodiment of the invention, the concentration of the oxosulfur reducing pigment, $BaS_2O_3$, in the luminescent layer is from 0.1 to 10.0 weight percent relative to the weight of the phosphor (also referred to herein as (wt/wt)%). A preferred concentration in that embodiment is from 1.0 to 6.0 (wt/wt)%, or more preferably 2.5 (wt/wt)%. In that embodiment, the weight of the $BaS_2O_3$ is equal to the total weight percent (relative to the phosphor) of white pigment in the layer. Substantially the same ranges and concentrations are predicted for other oxosulfur reducing pigments of the invention in view of the results seen in Examples 6-9.

The concentration of oxosulfur reducing pigment in the luminescent layer and/or the overcoat layer of the storage panel of the invention is sufficient to increase the photostimulated luminescence relative to a control panel lacking oxosulfur reducing pigment. The total concentration of white pigment in the luminescent and overcoat layers is insufficient to mitigate that increase and the resulting storage panel of the invention has about the same resolution as a similar panel lacking oxosulfur reducing pigment. This result is unexpected in view of the fact that the oxosulfur reducing pigment is both a stabilizer and a white pigment. The references above-cited suggest that a stabilizer tends to maintain or modestly increase speed while a white pigment tends to decrease speed and increase resolution.

In particular embodiments of the invention, it may be desirable to add, in addition to the oxosulfur reducing pigment, an additional white pigment. The amount of additional white pigment that can be added is limited, however, since it contributes to the total pigment concentration. Suitable pigments, are well known to those skilled in the art and include materials such as titania and barium sulfate.

The phosphor in the storage panel can be chosen from all storage phosphors, however, the advantage provided by the oxosulfur reducing pigment is stabilization against discoloration associated with iodine containing phosphors. Thus a storage phosphor should be selected which includes iodine, for example, divalent alkaline earth metal fluorohalide storage phosphors containing iodine and alkali metal halide storage phosphors containing iodine. A mixture of phosphors, at least one of which contains iodide, could also be used, if desired, to form an panel having optimal properties for a particular application. Panel constructions containing more than one phosphor-containing layer are also possible, with iodine containing phosphors being present in one or more of the phosphor-containing layers.

In particular embodiments of the invention, the phosphor is the product of firing starting materials comprising a combination of species characterized by the relationship:

$$MFX_{1-z}I_z \bullet uM^aX^a:yA:eQ:tD,$$

where M is selected from Mg, Ca, Sr, and Ba; X is selected from Cl and Br; $M^a$ is selected from Na, K, Rb, and Cs; $X^a$ is selected from Cl, Br, and I; A is selected from Eu, Ce, Sm, and Tb; Q is an oxide selected from BeO, MgO, CaO, SrO, BaO, ZnO, $Al_2O_3$, $La_2O_3$, $In_2O_3$, $SiO_2$, $TiO_2$, $ZrO_2$, $GeO_2$, $SnO_2$, $Nb_2O_5$, $Ta_2O_5$, and $ThO_2$; and D is selected from V, Cr, Mn, Fe, Co, and Ni. Numbers are represented by the following: z is from 1 X $10^{-4}$ to 1, u is from 0 to 1, y is from 1 X $10^{-4}$ to 0.1, e is from 0 to 1, or more preferably from $10^{-5}$ to 0.1, and t is from 0 to $10^{-2}$. The same designations appearing elsewhere herein have the same meanings unless specifically stated to the contrary. Groups of materials, for example the materials defined by M, are to be understood as inclusive of combinations of materials in that group.

In some of those embodiments of the invention, the inventive storage panel includes a divalent alkaline earth metal fluorohalide phosphor containing iodine which is the product of firing an intermediate, comprising a combination of species characterized by the relationship:

$$(Ba_{1-a-b-c}Mg_aCa_bSr_c)FX_{1-z}I_z \bullet rM^aX^a:yA:eQ$$

where x, $M^a$, $X^a$, A, Q, z, y, and e have the same meanings as in formula (1) and the sum of a, b, and c is from 0 to 0.4, and r is from $10^{-6}$ to 0.1. In a particular embodiment of the invention, $M^a$ is potassium and the storage phosphor is further characterized as disclosed in U.S. Patent Application Serial No. 08/157,583,

filed concurrently with this application, by Joseph F. Bringley, Philip S. Bryan and Andrea M. Hyde, entitled: ALKALINE EARTH METAL FLUOROBROMOIODIDE STORAGE PHOSPHOR AND RADIATION IMAGE STORAGE PANEL.

It is preferred that the phosphor be a storage phosphor produced utilizing an oxosulfur reducing agent containing phosphor intermediate, disclosed in U.S. Patent Application Serial No. 08/157,582, filed concurrently with this application, by Joseph F. Bringley, Philip S. Bryan and Andrea M. Hyde, entitled: STABILIZED PHOSPHOR INTERMEDIATES, STORAGE PHOSPHORS, RADIATION IMAGE STORAGE PANELS, AND PREPARATION METHODS; (hereafter referred to as "Stabilized Phosphor Intermediates" Application). The stabilized phosphor intermediate disclosed therein and its resulting phosphor have increased photostimulated luminescence in comparison to unstabilized controls. It has been determined by applicants that the increased photostimulated luminescent provided thereby is cumulative with the increased photostimulated luminescent provided in the claimed invention.

The oxosulfur reducing agent utilized in the Stabilized Phosphor Intermediates Application can be selected from the oxosulfur reducing pigments disclosed herein if care is taken in the selection of a suitable cation which will not cause deleterious effects on the phosphor produced. Alternatively, the oxosulfur reducing agent utilized in the Stabilized Phosphor Intermediates Application can be selected from the organic oxosulfur reducing agents disclosed in U.S. Patent Application Serial No. 08/157,796, filed concurrently with this application, by Joseph F. Bringley, Andrea M. Hyde, Philip S. Bryan, Barbara Fisher, and Luther C. Roberts, entitled: RADIOGRAPHIC PHOSPHOR PANEL HAVING BINDER COMPATIBLE OXOSULFUR STABILIZER AND METHOD FOR PREPARING PHOSPHOR PANEL. The oxosulfur reducing agents disclosed therein include organic salts of the same oxosulfur anions disclosed herein and Bunte compounds.

In the inventive phosphor of the Stabilized Phosphor Intermediates Application, the oxosulfur reducing agent is present in the unfired intermediate for the phosphor in an amount sufficient to increase relative photostimulated luminescence in the fired phosphor relative to the same phosphor absent said reducing agent for iodine. In a particular embodiments of the Stabilized Phosphor Intermediates Application, the phosphor has the general structure

$MFX_{1-z}I_z \bullet uM^aX^a{:}yA{:}eQ{:}tD$

or $(Ba_{1-a-b-c}Mg_aCa_bSr_c)FX_{1-z}I_z \bullet rM^aX^a{:}yA{:}eQ$

in which these formulas have the same meanings as discussed above and the oxosulfur reducing agent is present in the intermediates in a molar ratio of sulfur to alkaline earth metal of greater than 1 X $10^{-4}$ and less than 0.020.

The luminescent layer of the storage panel of the invention contains a polymeric binder to give it structural coherence. In general the binders useful in the practice of the invention are those conventionally employed in the art. Binders are generally chosen from a wide variety of known organic polymers which are transparent to x-rays, stimulating, and emitted light. Binders commonly employed in the art include sodium o-sulfobenzaldehyde acetal of poly(vinyl alcohol); chlorosulfonated poly(ethylene); a mixture of macromolecular bisphenol poly(carbonates) and copolymers comprising bisphenol carbonates and poly(alkylene oxides); aqueous ethanol soluble nylons; poly(alkyl acrylates and methacrylates) and copolymers of poly(alkyl acrylates and methacrylates with acrylic and methacrylic acid); poly(vinyl butyral); linear polyesters; and poly(urethane) elastomers. These and other useful binders are disclosed in US-A-2,502,529; US-A-2,887,379; US-A-3,617,285; US-A-3,300,310; US-A-3,300,311; and US-A-3,743,833; and in Research Disclosure, Vol. 154, February 1977, Item 15444, and Vol. 182, June 1979. Research Disclosure is published by Kenneth Mason Publications, Ltd., Emsworth, Hampshire P010 7DD, England. Particularly preferred binders are poly(urethanes), such as those commercially available under the trademark Estane from Goodrich Chemical Co., the trademark Permuthane from the Permuthane Division of ICI, and the trademark Cargill from Cargill, Inc.

Any conventional ratio of phosphor to binder can be employed. Generally thinner phosphor layers and sharper images are realized when a high weight ratio of phosphor to binder is employed. Preferred phosphor to binder ratios are in the range of from 7:1 to 25:1 for panel constructions intended to withstand commercial exposure repetitions without loss of structural integrity. For limited or single exposure applications it is, of course, appreciated that any minimal amount of binder consistent with structural integrity is satisfactory.

For the highest attainable speeds a white support, such as a titania or barium sulfate loaded or coated support is employed. Particular reflective supports which offer a balance of speed and sharpness are those containing reflective microlenslets, such as are disclosed in US-A-4,912,333. In those instances in which it

is desired to reduce the effective thickness of a phosphor layer below its actual thickness the phosphor layer is modified to impart a small, but significant degree of light absorption. If the binder is chosen to exhibit the desired degree of light absorption, then no other ingredient of the phosphor layer is required to perform the light attenuation function. It is specifically noted that the less structurally complex chromophores for ultraviolet absorption particularly lend themselves to incorporation in polymers. A separate absorber can be incorporated in the phosphor layer to reduce its effective thickness. The absorber can be a dye or pigment capable of absorbing light within a desired spectrum. Black dyes and pigments such as carbon black are, of course, generally useful with phosphors, because of their broad absorption spectra. It is preferable, however, to include a dye or pigment which absorbs some of the stimulating radiation, generally provided by a laser; but mostly reflects emitted light. US-A-4,491,736 teaches the use of such materials in storage panels.

Apart from the phosphor layers and the assembly features described above, the panel can be of any conventional construction. Panels typically have one or more flexible or rigid support layers. Flexible layers are most commonly polymeric. The most common polymeric supports are films of high dimensional integrity, such as poly(ethylene terephthalate) film supports. In a preferred embodiment of the invention, support is provided by one or more polymeric layers and by a rigid plate of aluminum or the like.

Metal layers, such as aluminum, may enhance reflection. Paper supports, though less common than film supports, are known and can be used for specific applications. Dyes and pigments are commonly loaded into supports to enhance absorption or reflection of light. Air can be trapped in supports to reflect ultraviolet and visible light. Supports and the subbing layers used to improve coating adhesion can be chosen from among those employed for silver halide photographic and radiographic elements, as illustrated by Research Disclosure, Vol. 176, December 1978, Item 17643, Section XVII, and Research Disclosure, Vol. 184, August 1979, Item 18431, Section I.

An overcoat layer, although not required, is commonly located over the luminescent layer for humidity and wear protection. If the storage panel includes an overcoat layer, the oxosulfur reducing pigment can be located in the overcoat layer or the luminescent layer or both. The overcoat layer comprises a binder chosen using the criteria described above for the binder in the luminescent layer. It is understood that the binder used in the overcoat layer, and the binder forming the matrix in which the phosphor particles are held are preferably formed of transparent resins that do not interfere with the passage of x-rays or stimulating radiation or the emitted light from the phosphors. The overcoat binder can be the same binder as in the luminescent layer or different and can also be chosen from polymers useful for supports. Since it is generally required that the overcoat layer exhibit toughness and scratch resistance polymers conventionally employed for film supports are favored. For example, cellulose acetate is an overcoat commonly used with the poly(urethane) binders. Overcoat polymers are often used also to seal the edges of the phosphor layer. In a preferred embodiment of the invention, the overcoat is produced in accordance with U.S. Patent Application Serial No. 08/157,581, filed concurrently with this application, by Luther C. Roberts, entitled: OVERCOATED RADIATION IMAGE STORAGE PANEL AND METHOD FOR PREPARING RADIATION IMAGE STORAGE PANEL.

While anticurl layers are not required for the panels, they are generally preferred for inclusion. The function of the anticurl layer is to balance the forces exerted by the layers coated on the opposite major surface of a support which, if left unchecked, cause the support to assume a non-planar configuration, that is, to curl or roll up on itself. Materials forming the anticurl layers can be chosen from among those identified above for use as binders and overcoats. Generally an anticurl layer is formed of the same polymer as the overcoat on the opposite side of the support. For example, cellulose acetate is preferred for both overcoat and anticurl layers.

Any one or combination of conventional panel features compatible with the features described herein can, of course, be employed. Conventional storage panel constructions are disclosed in US-A-4,380,702. Conventional intensifying panel constructions are disclosed in Research Disclosure, Vol. 184, August 1979, Item 18431.

The radiographic panels of the invention are formed by conventional coating techniques. Phosphor powder, oxosulfur reducing pigment and other addenda are mixed with a solution of a resin binder material and coated by means such as blade coating onto a substrate. US-A-4,505,989 describes suitable techniques known in the art for preparing an X-ray image storage panel.

The following Examples and Comparative Examples are presented to further illustrate and elucidate some preferred modes of practice of the invention. Unless otherwise indicated, all starting materials were commercially obtained.

The thiosulfate salts were obtained commercially except as follows. $BaS_2O_3 \cdot H_2O$ was prepared according to the following equation:

$$excess\ Na_2S_2O_3 \cdot 5H_2O + BaCl_2 \cdot 2H_2O \longrightarrow BaS_2O_3 \cdot H_2O + 2\ NaCl.$$

In a typical procedure, barium chloride dihydrate was dissolved in about 2 parts by weight of distilled water and a 2-fold excess of sodium thiosulfate was dissolved separately in about 1.5 parts by weight distilled water. The solutions were filtered to remove insoluble impurities and were then heated to 40-50 °C. The barium chloride solution was then added via an addition funnel to the thiosulfate solution over 5 minutes with vigorous stirring, and a white precipitate immediately formed. The precipitate was then collected by vacuum filtration or other means and washed with copious amounts of distilled water to remove any residual sodium chloride by-product. The white solid was then air dried for 24 hours to yield very pure $BaS_2O_3 \cdot H_2O$. The product was then analyzed by powder X-ray diffraction to confirm its identity and purity.

Hydrous salts were first dried when necessary in air or under vacuum at a suitable temperature to remove waters of crystallization. $BaS_2O_3 \cdot H_2O$ was dried at 150 °C for 24 hours yielding $BaS_2O_3$. $MgS_2O_3 \cdot 6H_2O$ was dried at 110 °C yielding $MgS_2O_3 \cdot 3H_2O$. $K_2S_2O_3 \cdot 1.5H_2O$ was dried in vacuo at 115 °C for 18 hours yielding $K_2S_2O_3$. $Na_2S_2O_3$ and $(NH_4)_2S_2O_3$ were obtained as anhydrous salts. The anhydrous salts were then pulverized in each case to obtain a particle size ranging from 0.1 to 20 micrometers. The preferred particle size ranges from 0.1 to 3 micrometers.

The X-ray storage phosphors used to prepare coatings were prepared by the following general procedures.

Preparation of $BaFBr_{0.80}I_{0.20}:0.001Eu^{2+}$.

In a 2000 ml beaker containing a Teflon coated magnetic stir bar, 304.00 grams of $BaBr_2 \cdot 2H_2O$ and 97.45 grams of $BaI_2 \cdot 2H_2O$ were dissolved in 500 ml of distilled water. The solution was then filtered through 0.45 micrometer filter paper and 2.8 ml of a 0.8 M EU(III) solution in 1 Molar aqueous HBr was added. To this solution, 200.00 grams of $BaF_2$ was added slowly with stirring over 60 seconds. The mixture was allowed to stir at 25 °C for 30 minutes and then carefully heated to dryness in a microwave oven over 45-60 minutes. The resulting white cakes were then ground separately with an agate mortar and pestle and placed in 50 ml alumina crucibles. The white powders contained in the crucibles were then heated to 800-900 °C for 3 hours in a tube furnace containing an atmosphere of dry nitrogen or argon. After cooling in inert atmosphere, the fired phosphor was then ground with an agate mortar and pestle and sieved through a 38 micrometer mesh yielding the finished phosphor.

Preparation of $BaFBr_{0.95}I_{0.05}:0.001Eu^{2+}$:

The preparation was identical to the preparation of $BaFBr_{0.8}I_{0.2}:0.001Eu^{2+}$ except that the molar ratio of Br/I was adjusted to 95/5.

Preparation of $BaFBr_{0.50}I_{0.50}:0.001Eu^{2+}$:

The preparation was identical to the preparation of $BaFBr_{0.80}I_{0.20}:0.001Eu^{2+}$ except that the molar ratio of Br/I was adjusted to 50/50.

Preparation of Image Storage Panels:

Image storage panels were prepared by the following general procedure. Phosphor and oxosulfur reducing pigment, if any, were dispersed in a 13% (weight/weight) solution of PERMUTHANE™ U-6366 polyurethane marketed by ICI Polyurethanes Group of West Deptford, New Jersey in 93:7 (weight/weight) dichloromethane/methanol solvent. The dispersions were often milled 30 minutes with zirconium oxide beads on a paint shaker. The phosphor to binder ratio was about 15:1. Knife-coatings were prepared on a

polyethylene terephthalate support. The knife-coatings were allowed to air-dry to produce luminescent layers. After drying, except where noted, the completed storage panels were overcoated with a polymer solution of cellulose acetate in acetone or with a fluorinated polymer, Kynar 7201 marketed by ELF Atochem North America, Inc., of Bloomington, Minnesota, or equivalent in acetone. For each set of experiments, a comparison example was prepared in an identical manner, except that no amount of stabilizer was added.

The relative photostimulated luminescence (PSL) intensities of the image storage panels were measured by cutting 2.6 centimeter diameter disks from the panels, and simultaneously exposing the sample and a standard to filtered X-radiation. The X-ray source was a tungsten target tube operating at 70 kVp and 3.0 mA. The filtration consisted of a 3.5 centimeter thickness of aluminum. After exposure to X-rays, the samples and standard were stimulated with a 4-millisecond pulse at 633 nanometers from a 12 mW helium-neon laser. The stimulated emission was detected using a photomultiplier tube after passing through a Schott BG-25 filter. The responses were corrected for X-ray exposure variations by normalizing the measured response in each case to an internal standard. The PSL responses for particular Examples are reported relative to a Comparative Example handled in an identical manner, but which did not contain a oxosulfur reducing pigment as stabilizer. The response of the Comparative Example in each case was arbitrarily set equal to 100. The measured PSL responses were corrected for variations in phosphor coverage by dividing by the coverage value determined for that particular disk.

The sharpness of the screen samples was determined by measuring MTF(h). MTF (modulation transfer function) was calculated as the modulus of the Fourier transform of the line spread function (LSF), which was determined by imaging a narrow slit x-ray exposure of the panel of the Example or Comparative Example. The exposed panel was raster-scanned using a helium-neon laser, at 633 nanometers, focused to a 100 micrometer spot size. The same laser power level was used for all measurements. The digitization rate was such that an effective pixel spacing of 25 micrometers was achieved in the direction of the moving beam. The spacing between sequential scans of the laser beam (lines of the image) was 250 micrometers. The direction of the scanning beam was perpendicular to the direction of the slit x-ray exposure. The LSF was obtained by averaging together several sequential lines to generate a one-dimension profile of the slit x-ray exposure. Values are reported as MTF(h), which is the spatial frequency at which MTF drops to 50 percent of maximum.

EXAMPLES 1-9

Image storage panels were prepared from $BaFBr_{0.80}I_{0.20}:0.001Eu^{2+}$ storage phosphor as above described. In the Examples, oxosulfur reducing pigments were dispersed in the luminescent layer as indicated in Tables 1 and 2. Concentrations of oxosulfur reducing pigments are indicated in Tables 1-2, and the other tables, as weight percentages ((wt/wt)%) based upon the weight of the phosphor. The storage panels were then overcoated with Kynar 7201. The photostimulated luminescence (PSL) values and MTF values were measured as above-described and are reported in Tables 1-2.

COMPARATIVE EXAMPLE 1

A storage panel was prepared and evaluated in the same manner and at the same time as in Examples 1-9 except no oxosulfur reducing pigment was present.

EXAMPLE 10

An image storage panel was prepared and evaluated by the same procedures as Examples 1-9, with the exception that the phosphor was $BaFBr_{0.95}I_{0.05}:0.001Eu^{2+}$ and the dispersion was not milled. An overcoat solution of cellulose acetate was applied.

COMPARATIVE EXAMPLE 2

A storage panel was prepared and evaluated in the same manner and at the same time as in Example 10 except no oxosulfur reducing pigment was present.

EXAMPLE 11

An image storage panel was prepared and evaluated by the same procedures as Example 10, with the exception that the phosphor was $BaFBr_{0.50}I_{0.50}$:$0.001Eu^{2+}$.

COMPARATIVE EXAMPLE 3

A storage panel was prepared and evaluated in the same manner and at the same time as in Example 11 except no oxosulfur reducing pigment was present.

EXAMPLE 12

An image storage panel was prepared and evaluated by the same procedures as Example 1, with the exceptions that the dispersion was not milled.

COMPARATIVE EXAMPLE 4

A storage panel was prepared and evaluated in the same manner and at the same time as in Example 12 except barium sulfate (white pigment) was present in the luminescent layer instead of oxosulfur reducing pigment.

COMPARATIVE EXAMPLE 5

A storage panel was prepared and evaluated in the same manner and at the same time as in Example 12 except no oxosulfur reducing pigment was added, nor was white pigment added.

EXAMPLE 13

The luminescent layer of an image storage panel was prepared by the same procedure as in Example 1, except no oxosulfur reducing pigment was added to the luminescent layer. The overcoat solution of cellulose acetate in acetone was prepared and $BaS_2O_3$ was added (0.50 weight percentage based upon the weight of the phosphor in the luminescent layer). The resulting mixture was applied to form an overcoat layer.

COMPARATIVE EXAMPLE 6

A storage panel was prepared and evaluated in the same manner and at the same time as in Example 13 except no oxosulfur reducing pigment was added to the overcoat layer.

Table 1

| The effect of $BaS_20_3$ in luminescent layer of $BaFBr_{0.80}I_{0.20}$:$0.001Eu^{2+}$ image storage panels | | | |
|---|---|---|---|
| Example or Comparative Example | (wt/wt)% $BaS_2O_3$ added | PSL Response | MTF (h) |
| Example 1 | 0.1 | 129 | 1.19 |
| Example 2 | 1.0 | 151 | 1.08 |
| Example 3 | 2.5 | 157 | 1.07 |
| Example 4 | 6.0 | 152 | 1.10 |
| Example 5 | 10.0 | 142 | 1.19 |
| Comparative Example 1 | 0.0 | 100 | 1.13 |

Table 2

| The effect of various oxosulfur reducing pigments in luminescent layer of $BaFBr_{0.80}I_{0.20}$:0.001$Eu^{2+}$ image storage panels | | |
|---|---|---|
| Example or Comparative Example | Oxosulfur Reducing Pigment Added: 2%(wt/wt) | PSL Response |
| Example 6 | $(NH_4)_2S_2O_3$ | 176 |
| Example 7 | $MgS_20_3 \bullet 3H_2O$ | 113 |
| Example 8 | $K_2S_2O_3$ | 158 |
| Example 9 | $Na_2S_2O_3$ | 154 |
| Comparative Example 1 | none | 100 |

Table 3

| The effect of $BaS_20_3$ in luminescent layer of $BaFBr_{0.95}I_{0.05}$:0.001$Eu^{2+}$ image storage panels | | |
|---|---|---|
| Example or Comparative Example | (wt/wt)% BaS2O3 | PSL Response |
| Example 10 | 2.5 | 152 |
| Comparative Example 2 | none | 100 |

Table 4

| The effect of $BaS_20_3$ in luminescent layer of $BaFBr_{0.50}I_{0.50}$:0.001$Eu^{2+}$ image storage panels | | |
|---|---|---|
| Example or Comparative Example | (wt/wt)% $BaS_2O_3$ | PSL Response |
| Example 11 | 2.5 | 145 |
| Comparative Example 3 | none | 100 |

Table 5

| Comparison of the effect of $BaS_20_3$ and the effect of $BaSO_4$ in luminescent layer of $BaFBr_{0.80}I_{0.20}$:0.001$Eu^{2+}$ image storage panels | | |
|---|---|---|
| Example or Comparative Example | Addenda 2 (wt/wt)% | PSL Response |
| Example 12 | $BaS_2O_3$ | 119 |
| Comparative Example 4 | $BaSO_4$ | 90 |
| Comparative Example 5 | none | 100 |

Table 6

| The effect of $BaS_2O_3$ in overcoat layer of $BaFBr_{0.80}I_{0.20}$:$0.001Eu^{2+}$ image storage panels | | |
|---|---|---|
| Example or Comparative Example | Overcoat addenda 0.5(wt/wt)% | PSL Response |
| Example 13 | $BaS_2O_3$ | 110 |
| Comparative Example 6 | none | 100 |

The following explanation can be provided to explain the mechanism of action of the claimed invention. The scope of the claimed invention is not, however, limited by any explanation or theory. The storage panels of the invention have higher photostimulated luminescence response, that is, higher speed, than similar storage panels lacking oxosulfur reducing pigment, but have about the same resolution. This contrasts with a decrease in speed, relative to a control, seen with the white pigment $BaSO_4$ present in the luminescent layer in similar concentrations. The oxosulfur reducing pigment, as a white pigment, can be presumed to cause light scattering to about the same extent as $BaSO_4$ or other conventional white pigment. The expected effect of light scattering is a decrease in speed and an increase in resolution. Conversely, the oxosulfur reducing pigment, as a stabilizer, reduces yellowing and increases speed. To the extent that the yellowing acts like a colored pigment and absorbs scattered stimulating radiation, the oxosulfur reducing pigment in decreasing yellowing, also decreases resolution. By this explanation, the overall combination of light scattering and stabilization would be varied by changing the concentration of the oxosulfur reducing pigment relative to the phosphor. Adding more oxosulfur reducing pigment up to a level at which all yellowing would be removed, should increase speed and decrease resolution. Above that level, resolution should still increase due to light scattering, but speed should decrease.

## Claims

**1.** A radiation image storage panel comprising a support, a luminescent layer overlaying said support, and an optional overcoat layer overlaying said luminescent layer, said luminescent layer including phosphor crystals capable of absorbing X-radiation and emitting electromagnetic radiation of a second longer wavelength upon exposure to electromagnetic radiation of a third wavelength, one of said layers including a dispersed oxosulfur reducing pigment, said oxosulfur reducing pigment being a reducing agent for iodine, said oxosulfur reducing pigment exhibiting light scattering, said oxosulfur reducing pigment having a concentration sufficient to substantially increase the photostimulated luminescence of said panel, said luminescent layer having a total concentration of light scattering pigment insufficient to substantially increase the resolution of said panel.

**2.** The storage panel of claim 1 wherein said oxosulfur reducing pigment is selected from the group consisting of inorganic oxosulfur salts having anions having the general formula $S_jO_k$ wherein $0.25 < j/k < 1.0$.

**3.** The storage panel of claim 1 wherein said reducing pigment is selected from the group consisting of: inorganic salts of $SO_3^{2-}$, $S_2O_4^{2-}$, $S_2O_3^{2-}$, $S_2O_5^{2-}$, and $S_4O_6^{2-}$.

**4.** The storage panel of claim 1 wherein said oxosulfur reducing pigment comprises a thiosulfate salt selected from the group consisting of $BaS_2O_3$, $(NH_4)_2S_2O_3$, $MgS_2O_3 \bullet 3H_2O$, $K_2S_2O_3$, and $Na_2S_2O_3$.

**5.** The storage panel of claim 1 wherein said oxosulfur reducing pigment is $(NH_4)_2S_2O_3$.

**6.** The storage panel of claim 1, 2, 3, 4, or 5 wherein said luminescent layer has a total concentration of light scattering pigment substantially equal to the concentration of said oxosulfur reducing pigment.

**7.** The storage panel of claim 1, 2, 3, 4, 5, or 6 wherein said phosphor consists essentially of the product of firing a combination of species characterized by the relationship:

$$MFX_{1-z}I_z \bullet uM^aX^a{:}yA{:}eQ{:}tD$$

wherein

M is selected from the group consisting of Mg, Ca, Sr, and Ba;

X is selected from the group consisting of Cl and Br;

$M^a$ is selected from the group consisting of Na, K, Rb, and Cs;

$X^a$ is selected from the group consisting of F, Cl, Br, and I;

A is selected from the group consisting of Eu, Ce, Sm, and Tb;

Q is selected from the group consisting of BeO, MgO, CaO, SrO, BaO, ZnO, $Al_2O_3$, $La_2O_3$, $In_2O_3$, $SiO_2$, $TiO_2$, $ZrO_2$, $GeO_2$, $SnO_2$, $Nb_2O_5$, $Ta_2O_5$, and $ThO_2$;

D is selected from the group consisting of V, Cr, Mn, Fe, Co, and Ni;

z is from $1 \times 10^{-4}$ to 1;

u is from 0 to 1;

y is from $1 \times 10^{-4}$ to 0.1;

e is from 0 to 1; and

t is from 0 to $10^{-2}$; and

oxosulfur reducing agent for iodine optionally present prior to said firing in an amount sufficient to increase relative photostimulated luminescence intensities relative to the phosphor defined above absent said reducing agent for iodine.

**8.** The storage panel of claim 7 wherein said combination of species is further characterized by the relationship:

$$(Ba_{1-a-b-c}Mg_aCa_bSr_c)FX_{1-z}I_z \bullet rM^aX^a{:}yA{:}eQ$$

wherein

X is selected from the group consisting of Cl and Br;

$M^a$ is selected from the group consisting of Na, K, Rb, and Cs;

$X^a$ is selected from the group consisting of F, Cl, Br, and I;

A is selected from the group consisting of Eu, Ce, Sm, and Tb;

Q is selected from the group consisting of BeO, MgO, CaO, SrO, BaO, ZnO, $Al_2O_3$, $La_2O_3$, $In_2O_3$, $SiO_2$, $TiO_2$, $ZrO_2$, $GeO_2$, $SnO_2$, $Nb_2O_5$, $Ta_2O_5$, and $ThO_2$;

a + b + c is from 0 to 0.4;

z is from $1 \times 10^{-4}$ to 1;

r is from $10^{-6}$ to 0.1;

y is from $1 \times 10^{-4}$ to 0.1;

e is from $10^{-5}$ to 0.1.

**9.** The storage panel of claim 7 or 8 wherein said oxosulfur reducing agent is selected from the group consisting of oxosulfur compounds having the general formula $S_jO_k$ wherein $0.25 < j/k < 1.0$ and said oxosulfur reducing agent is present prior to said firing in a molar ratio of sulfur to alkaline earth metal of greater than $1 \times 10^{-4}$ and less than 0.020.

**10.** The storage panel of claim 1, 2, 3, 4, 5, 6, 7, 8, or 9 wherein said oxosulfur reducing pigment has a concentration in at least one of said layers of from 1 to 10 percent based upon weight of said phosphor in said luminescent layer.

**11.** The storage phosphor of claim 10 wherein said layers have a total concentration of light scattering pigment of from 1 to 10 percent based upon weight of said phosphor.

**12.** The storage panel of claim 1, 2, 3, 4, 5, 6, 7, 8, 9, 10, or 11 wherein said support is substantially rigid.

European Patent Office

# EUROPEAN SEARCH REPORT

Application Number
EP 94 11 8495

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-4 900 641 (K.KOHDA & AL)<br>* the whole document *<br>--- | 1,7,8,12 | G21K4/00<br>C09K11/02<br>C09K11/85<br>C09K11/86 |
| A,D | EP-A-0 234 385 (FUJI PHOTO)<br>* the whole document *<br>--- | 1,7,8,12 | |
| A,D | US-A-3 023 313 (G.B.DE LA MATE & AL)<br>* the whole document *<br>--- | 1-4 | |
| A | EP-A-0 264 922 (FUJI PHOTO)<br>* claims 1-18 *<br>--- | 7,8,12 | |
| A | EP-A-0 104 652 (FUJI PHOTO)<br>* claims 1-4 *<br>--- | 7,8,12 | |
| A | EP-A-0 142 734 (FUJI PHOTO)<br>* claims 1-9 *<br>----- | 7,8,12 | |
| | | | **TECHNICAL FIELDS SEARCHED (Int.Cl.6)** |
| | | | G21K<br>C09K |

The present search report has been drawn up for all claims

| Place of search | Date of completion of the search | Examiner |
|---|---|---|
| THE HAGUE | 1 March 1995 | Drouot, M-C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document